# EUROPÄISCHE PATENTSCHRIFT

(11) **EP 2 180 288 B1**
(45) Veröffentlichungstag und Bekanntmachung des Hinweises auf die Patenterteilung: **27.07.2016**
(21) Anmeldenummer: 09173033.3
(22) Anmeldetag: 14.10.2009
(51) Int. Cl.: F41H 7/04, G05G 1/60

(54) **Fußauflageplatte eines Fahrzeuges mit Deformationselement zum Minenschutz**
Vehicle footrest with deformable element for mine protection
Repose-pied d'un véhicule avec un élément déformable pour protection contre les mines

(30) Priorität: 24.10.2008 DE 102008053152
(43) Veröffentlichungstag der Anmeldung: 28.04.2010
(73) Patentinhaber: Krauss-Maffei Wegmann GmbH & Co. KG, 80997 München (DE)
(72) Erfinder: Steger, Gernot, 80333 München (DE); Gahlert, Andreas, 85441, Hohenkammer (DE); von Hennings, Ulrich, 81241, München (DE)
(74) Vertreter: Feder Walter Ebert

(56) Entgegenhaltungen:
- WO-A1-2006/037314
- WO-A2-2006/022814
- DE-A1- 4 011 963
- DE-C1- 19 842 629

## Beschreibung

Die Erfindung betrifft ein Deformationselement zum Schutz einer Einrichtung in einem insbesondere militärischen Fahrzeug durch Umwandlung von Energie in Deformationsenergie bei einer Mineneinwirkung, mit einem unteren, mit dem Fahrzeugboden verbindbaren Schenkel und einem oberen, mit der Einrichtung verbindbaren Schenkel, wobei der obere Schenkel über einen Biegeabschnitt mit dem unteren Schenkel verbunden ist. Ferner betrifft die Erfindung eine Deformationsvorrichtung mit einem solchen Deformationselement sowie eine Fußauflage für ein Fahrzeug mit einer Fußauflagenplatte und einer oder mehrerer solcher Deformationsvorrichtungen.

Insbesondere bei militärischen Fahrzeugen kommt dem Minenschutz eine besondere Bedeutung zu. Ziel des Minenschutzes ist es, Insassen und Geräte des Fahrzeugs vor den Krafteinwirkungen einer insbesondere unter dem Fahrzeug gezündeten Mine zu schützen.

Es sind im Stand der Technik mehrere Konzepte für den Minenschutz vorhanden. Aus der DE 101 30 631 A1 ist es beispielsweise bekannt, in einem minengeschützten Kraftfahrzeug einen Fahrzeugsitz am Dach oder im Bereich der Seitenwand des Fahrzeugs aufzuhängen und die Sitzkonsole des Fahrzeugsitzes zum Fahrzeug-Innenboden und/oder zum unteren Bereich der Seitenwand hin über Verbindungselemente, die nur Zugkräfte jedoch keine Druckkräfte übertragen können, abzuspannen. Eine solche Konstruktion ist aufwändig und aus Platzgründen nachteilig.

Da in besonderem Maße bei einer Mineneinwirkung mit einer im Wesentlichen senkrecht zum Fahrzeugboden gerichteten Kraft die Füße bzw. Beine der Insassen belastet werden, sind verschiedene Fußauflagen bekannt, welche einen Minenschutz aufweisen. Beispielsweise die DE 10 2004 054 962 A1 beschreibt eine Fußauflage in einem minengeschützten militärischen Fahrzeug mit einer in einem vorgegebenen Abstand oberhalb des Fahrzeug-Innenbodens angeordneten Fußplatte, die sich über Druckfedern auf dem Fahrzeug-Innenboden abstützt und zum Fahrzeug-Innenboden hin über Verbindungselemente, die nur Zugkräfte jedoch keine Druckkräfte übertragen können, beispielsweise über Drahtseile, abgespannt ist. Die DE 10 2007 002 576 A1 beschreibt beispielsweise eine durch Federn entkoppelte Pedaleinheit in einem minengeschützten militärischen Fahrzeug.

Nachteilig an den Federlösungen ist, dass die Anforderungen an die verwendeten Federn hoch sind, wodurch hohe Kosten entstehen. Ferner können mit den geeigneten Federn nur geringe maximale Vertikalhübe erreicht werden, da der Ausbeulweg des Bodens durch die Höhe des zusammengedrückten Federpaketes verringert wird, so dass sehr große Federn verwendet werden müssen, wodurch jedoch in nachteiliger Weise eine Beeinträchtigung des in Fahrzeugen ohnehin geringen Fahrzeuginnenraumes auftritt. Die aufnehmbare Energie ist zudem durch das vollständig zusammengedrückte Federpaket begrenzt, so dass Überlasten nicht ausreichend abgefangen werden können. Insgesamt weisen derartige Bauformen ein vergleichsweise hohes Gewicht auf.

Aus der DE 40 11 963 A1 ist die Verwendung von konischen Spiralfedern bekannt. Durch diese können gegenüber üblichen Spiralfedern zwar größere Umformwege erreicht werden, allerdings ist die aufnehmbare Energie begrenzt.

Weiterhin sind Minenschutzelemente bekannt, welche als Deformationselemente ausgestaltet sind. Wie beispielsweise aus der WO 2006/022814 A2 bekannt, können hierfür gebogene Umformbleche zum Einsatz kommen. Diese haben allerdings ebenfalls den Nachteil, dass aus Platzgründen nur geringe, für Überlasten nicht ausreichende Vertikalhübe erreichbar sind. Zudem konnten bislang keine Federstähle eingesetzt werden, da aufgrund der einfachen Geometrie bei hohen Umformungen die Bruchdehnungen überschritten worden wären.

Die Erfindung hat die Aufgabe, einen Minenschutz für eine Fahrzeugeinrichtung bereitzustellen, welche auch bei großen Mineneinwirkungen bei kleiner Bauweise einen ausreichenden Vertikalhub gewährleistet.

Ein die Aufgabe lösendes, erfindungsgemäßes Deformationselement ist Bestandteil des Patentanspruches 1. Eine die Aufgabe lösende Deformationsvorrichtung ist Bestandteil des Patentanspruches 10. Eine die Aufgabe lösende, erfindungsgemäße Fußauflage ist Bestandteil des Patentanspruches 13. Vorteilhafte Weiterbildungen sind Bestandteil der abhängigen Ansprüche.

Das erfindungsgemäße Deformationselement ist derart ausgestaltet, dass der obere und der untere Schenkel unter dem Einfluss einer im Wesentlichen senkrecht zum Fahrzeugboden gerichteten Kraft in verschiedenen, quer zur Kraftrichtung gegeneinander versetzten Deformationssektoren deformierbar sind.

Durch den Versatz der Deformationssektoren wird erreicht, dass die beiden Schenkel während des Deformationsvorganges nicht aneinander stoßen, sondern aneinander vorbei bewegbar sind. Hierdurch kann der maximale Vertikalhub deutlich vergrößert werden. Als maximaler Vertikalhub wir die Strecke verstanden, welche sich aus der Differenz des Abstandes des Fahrzeugbodens zur Einrichtung im undeformierten Zustand und des Abstandes des Fahrzeugbodens zur Einrichtung im vollständig deformierten Zustand ergibt.

Erfindungsgemäß ist das Deformationselement, insbesondere der Biegeabschnitt, gabelförmig ausgestaltet, so dass der untere Schenkel oder der obere Schenkel zwei Schenkelabschnitte mit jeweils einem eigenen Deformationssektor aufweist. Die Schenkel können auch mehr als zwei Schenkelabschnitte aufweisen. Diese sind dann insbesondere derart ausgestaltet, dass sie bei einer Deformation mit den gegenüberliegenden Schenkelabschnitten kämmen.

Insbesondere durch die Gabelform kann eine Symmetrie des Deformationselementes erreicht werden, so dass es bei Einwirkung einer im Wesentlichen senkrecht zum Fahrzeugboden gerichteten Kraft torsionsfrei deformierbar ist. Hierdurch erfolgt die momentenfreie Deformation gleichmäßig und kontrolliert, so dass es zu keiner ungewollten Kipp- und Drehbewegung der zu schützenden Einrichtung kommt. Zusätzlich erhalten die Deformationselemente durch die symmetrische Deformation eine gleichmäßige Spannungs-/Dehnungsverteilung.

Bevorzugt umgeben die Deformationssektoren desjenigen Schenkels, welcher zwei Schenkelabschnitte aufweist, den Deformationssektor des anderen Schenkels. Hierdurch kann der mittige Schenkel zwischen den beiden anderen Schenkeln beim Deformieren hindurchtauchen, so dass der Vertikalhub vergrößert wird. Das Deformationselement kann hierbei eine gebogene Y-Form aufweisen.

Die Deformationssektoren sind überlappungsfrei zueinander versetzt. Dadurch können die Schenkel berührungsfrei aneinander vorbei bewegbar sein.

Bei einer besonders bevorzugten Ausgestaltung ist der Deformationshub größer als der Abstand zwischen dem oberen Schenkel und dem unteren Schenkel im undeformierten Zustand. Hierdurch kann eine kleine Bauweise des Deformationselementes erreicht werden.

Bevorzugt weist das Deformationselement ein im Wesentlichen U-förmiges Profil auf. Das U kann hierbei auf der Seite liegen, so dass der untere Schenkel mit dem Fahrzeugboden und der obere Schenkel mit der Fahrzeugeinrichtung verbindbar ist. Unter einer U-Form im Sinne der Erfindung wird jede Form verstanden, die im Profil, d. h. in der Seitenansicht, U-förmig ausgestaltet ist. Bevorzugt ist hierbei der maximale Vertikalhub größer als die Öffnungsweite der U-Form.

In vorteilhafter Weise kann das Deformationselement bei der Deformation eine progressive Kennlinie aufweisen, welche dadurch entstehen kann, dass das Material sich beim Biegen aufhärtet. Bevorzugt wird somit Federstahl für die Herstellung verwendet.

Um die Belastung an jeder Stelle des Deformationselementes gleichmäßig zu halten, kann der Biegeabschnitt einen einheitlichen Biegeradius aufweisen. Im Falle der U-Form entspricht der Biegeradius somit der Hälfte der Öffnungsweite der U-Form. Bei einer besonders bevorzugten Ausgestaltung ist der Biegeabschnitt halbkreisförmig, so dass der obere und der untere Schenkel parallel zueinander liegen.

Der obere und der untere Schenkel können als gerade Blechstreifen ausgestaltet sein, welche über den gebogenen Biegeabschnitt miteinander verbunden sind.

Erfindungsgemäß liegen der obere und der untere Schenkel übereinander.

Die erfindungsgemäße Deformationsvorrichtung weist ein bereits beschriebenes Deformationselement auf, wobei zusätzlich der untere Schenkel des Deformationselementes mit einem unteren Verbindungselement zur Verbindung mit dem Fahrzeugboden verbunden ist und/oder wobei der obere Schenkel des Deformationselementes mit einem oberen Verbindungselement zur Verbindung mit der Einrichtung verbunden ist. Durch die Verbindungselemente kann eine Anpassung des Deformationselementes an den Einbauraum zur Montage erreicht werden.

Bevorzugt umfasst das untere Verbindungselement einen Abstandshalter zwischen dem unteren Schenkelabschnitt und dem Fahrzeugboden zur Erzeugung eines unteren Deformationsraumes für den unteren Schenkel und/oder umfasst das obere Verbindungselement einen Abstandshalter zwischen dem oberen Schenkel und der Einrichtung zur Erzeugung eines oberen Deformationsraumes für den oberen Schenkel. Als Deformationsraum wird ein Freiraum verstanden, in welchen sich ein Teil eines Schenkels bei der Deformation hineinbewegen kann. Durch die Bereitstellung des Deformationsraumes kann sich eine günstige Deformationsform des Deformationselementes ergeben. Hierbei kann sich abschnittsweise der obere Schenkel ausgehend vom undeformierten Zustand auch nach oben hin bzw. der untere Schenkel nach unten hin verbiegen.

In vorteilhafter Weise ist die Deformationsvorrichtung derart ausgestaltet, dass das obere Verbindungselement und das untere Verbindungselement bei einer Deformation des Deformationselementes berührungsfrei aneinander vorbei bewegbar sind. Hierdurch kann wiederum der maximale Vertikalhub vergrößert werden, da die Verbindungselemente derart ausgestaltet sind, dass sie bei der Deformation nicht aneinanderstoßen. Bei einer Y-förmigen Ausgestaltung des Deformationselementes kann auch das Verbindungselement gabelförmig ausgestaltet sein, wobei das gegenüberliegende Verbindungselement bei der Deformation durch die Gabel hindurchtauchen kann. Bevorzugt haben die Verbindungselemente keinen Einfluss auf die Deformationssektoren der gegenüberliegenden Schenkel. Das untere Verbindungselement kann somit außerhalb des Deformationssektors des oberen Schenkels und das obere Verbindungselement außerhalb des Deformationssektors des unteren Schenkels liegen.

Die Einsatzmöglichkeiten des Deformationselementes bzw. der Deformationseinrichtung sind für eine Vielzahl von Einrichtungen von Fahrzeugen gegeben, beispielsweise für Fußauflagen, Sitze, Tische, Stauräume oder Zwischenböden. Als besonders wirksam hat sich eine Fußauflage für ein Fahrzeug mit einer Fußauflagenplatte und einer oder mehrerer Deformationseinrichtungen der bereits beschriebenen Art erwiesen. Die Fußauflagenplatte kann hierbei rechteckig ausgestaltet sein, wobei sie vier an jeder Ecke angeordnete Deformationsvorrichtungen aufweisen kann. Die Deformationsvorrichtungen können zudem paarweise derart angeordnet sein, dass die Biegeabschnitte ihrer Deformationselemente aufeinander zu ausgerichtet sind, so dass eine symmetrische Belastung und somit eine gleichmäßige Schutzwirkung der Fußauflagenplatte erreicht wird.

Eine vorteilhafte Ausgestaltung der Erfindung wird anhand der Figuren 1 bis 6 beschrieben. Es zeigen:
- Fig. 1: einen Fahrzeuginnenraum mit einer minengeschützten Fußauflage;
- Fig. 2: die Fußauflage aus Fig. 1 mit einer Fußauflagenplatte und vier Deformationsvorrichtungen;
- Fig. 3: ein Deformationselement einer Deformationsvorrichtung nach Fig. 2;
- Fig. 4: ein Verbindungselement der Deformationsvorrichtung nach Fig. 2;
- Fig. 5a, b: das Deformationselement nach Fig. 3 im deformierten Zustand und
- Fig. 6: eine Schnittansicht des Deformationselementes nach Fig. 3 in einer schematischen Darstellung.

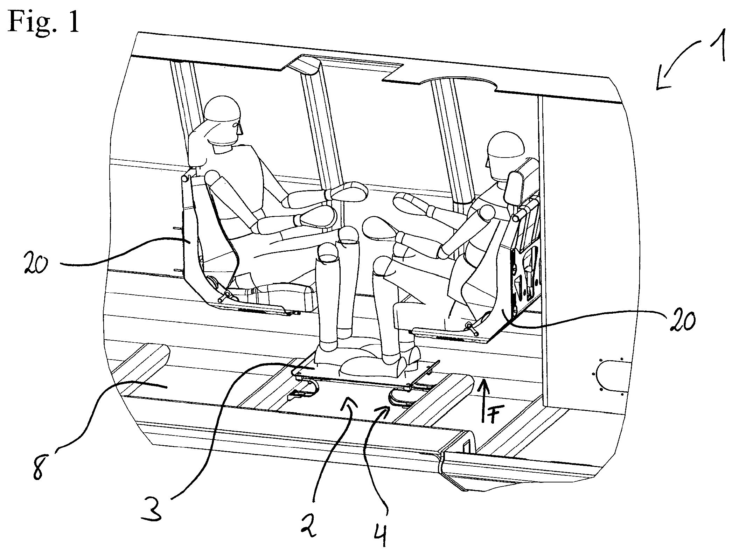

Die Fig. 1 zeigt den Innenraum eines nicht weiter dargestellten gepanzerten Militär-Fahrzeuges 1 mit einem Fahrzeugboden 8. In dem Fahrzeug 1 sind zwei Sitze 20 angeordnet, auf welchen Personen sitzen. Die Füße der Personen stehen hierbei auf einer Fußauflage 2, welche eine Fußauflagenplatte 3 sowie vier Deformationsvorrichtungen 4 umfasst. Die Deformationsvorrichtungen 4 leisten einen Schutz gegen eine Mineneinwirkung, welche eine im Wesentlichen senkrecht zum Fahrzeugboden 8 gerichtete Kraft F auf die Fußauflage 2 darstellt.

Die Fußauflage 2 ist derart ausgestaltet, dass sie vier, an jeder Ecke angeordnete Deformationsvorrichtungen 4 aufweist, wobei die Deformationsvorrichtungen 4 paarweise derart angeordnet sind, dass die Biegeabschnitte 11 ihrer Deformationselemente 5 aufeinander zu ausgerichtet sind.

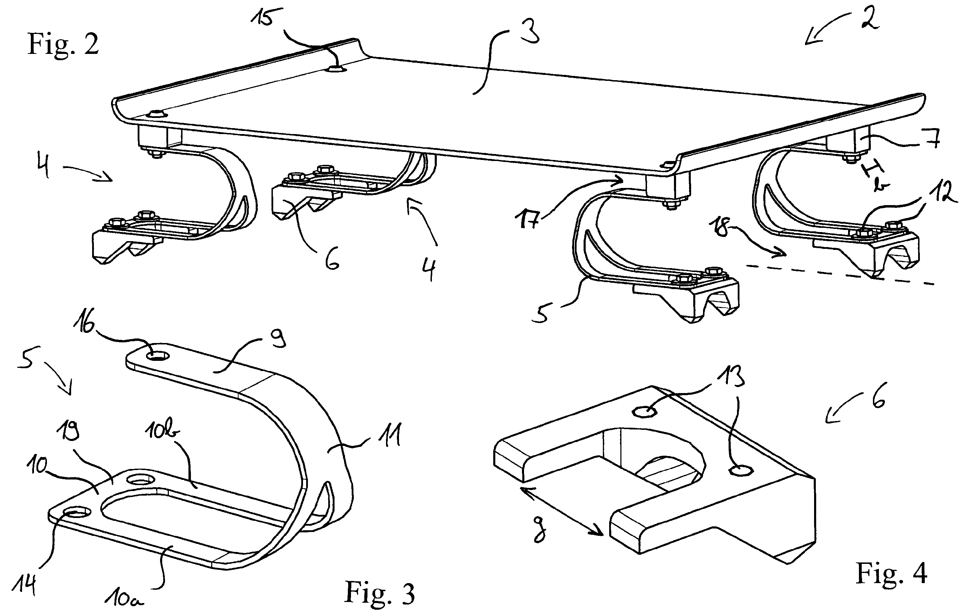

Die Fig. 2 zeigt die Fußauflage 2 aus Fig. 1. Die Fußauflage 2 umfasst eine im Wesentlichen rechteckige Fußauflagenplatte 3, welche die zu schützende Einrichtung darstellt. Zum Schutz vor Mineneinwirkungen ist die Fußauflagenplatte 3 mit vier Deformationsvorrichtungen 4 mit dem Fahrzeugboden 8 verbunden. Die Deformationsvorrichtungen 4 sind gleichartig ausgestaltet und umfassen jeweils ein Deformationselement 5 sowie ein unteres Verbindungselement 6 und ein oberes Verbindungselement 7.

Gemäß der Fig. 3 besteht das Deformationselement 5 aus drei Abschnitten, nämlich aus einem oberen Schenkel 9, einem unteren Schenkel 10 sowie einem die beiden Schenkel verbindenden Biegeabschnitt 11. Das Deformationselement 5 hat somit im Profil eine U-Form, wobei das U liegend angeordnet ist. Zur Erreichung einer torsionsfreien Deformation ist das Deformationselement 5 symmetrisch aufgebaut. Hierzu weist der Biegeabschnitt 11 eine Y-förmige Gabelung auf, so dass der untere Schenkel 10 aus zwei Schenkelabschnitten 10a und 10b besteht, die über einen Steg 19 endseitig miteinander verbunden sind.

Das Deformationselement 5 ist aus Federstahl hergestellt und weist bei der Deformation eine progressive Kraftkennlinie auf, da das Material sich beim Biegen aufhärtet. Nach einer Mineneinwirkung ist das Deformationselement 5 auch plastisch deformiert.

Der obere Schenkel 9, der als gerader Blechstreifen ausgestaltet ist, weist eine Bohrung 16 auf, so dass es über das Verbindungselement 7 mittels einer Schraube 15 mit der Einrichtung 3 verbindbar ist. Der untere Schenkel 10, der ebenfalls als gerader Blechstreifen ausgestaltet ist, weist entsprechend zwei Bohrungen 14 auf, so dass das Deformationselement 5 mittels Schrauben 12 mit dem unteren Verbindungselement 6, welches hierzu zwei Bohrungen 13 aufweist, verbindbar ist. Das untere Verbindungselement ist in nicht dargestellter Weise mit dem Fahrzeugboden 8 bzw. mit am Boden angeordneten Querverstrebungen verbunden.

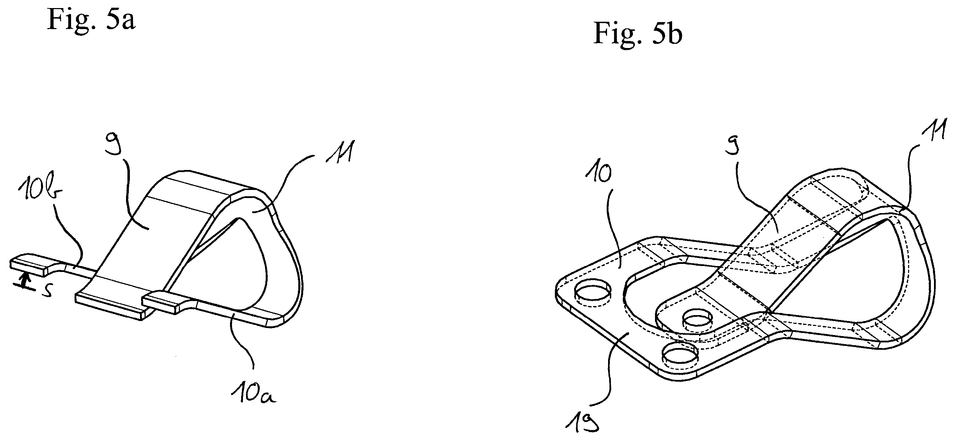

Die Fig. 5a und 5b zeigen das Deformationselement 5 im deformierten Zustand. Die Fig. 5a zeigt einen Ausschnitt des Deformationselementes 5, wobei der Verbindungssteg 19 nicht dargestellt ist. Durch die Mineneinwirkung gemäß der Kraft F ist eine Deformation des Deformationselementes 5 derart aufgetreten, dass die Schenkel sowie der Biegeabschnitt deformiert sind. Die Deformation der unteren Schenkelabschnitte 10a und 10b ist in jeweils einem eigenen vertikalen Deformationssektor erfolgt, gleichfalls ist auch die Deformation des oberen Schenkels 9 in einem eigenen Deformationssektor erfolgt. Die Deformationssektoren sind hierbei quer zur Kraftrichtung versetzt, so dass sich die Schenkel (9, 10) bei der Deformation nicht berühren, sondern aneinander vorbei bewegt worden sind. Hierdurch kann ein großer maximaler Vertikalhub erreicht werden.

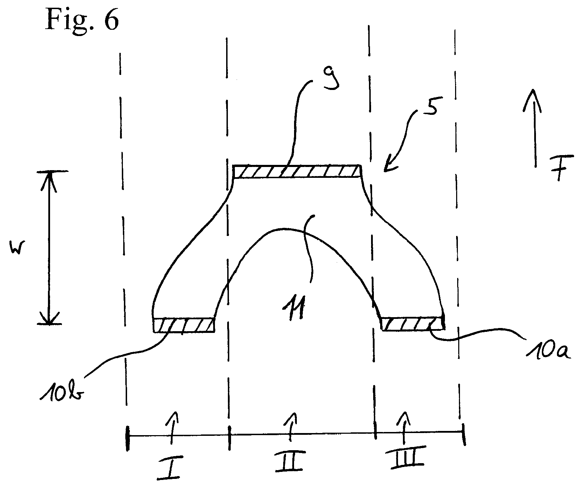

Zur Veranschaulichung der Deformationssektoren dient Fig. 6, welche das Deformationselement 5 in einer frontalen Schnittansicht im undeformierten Zustand zeigt. Der obere Schenkel 9 deformiert sich bei einer Deformation im Deformationssektor II. Dieser Deformationssektor II wird von den Deformationssektoren I des Schenkelabschnittes 10b und dem Deformationssektor III des Schenkelabschnittes 10a umgeben. Die Deformationssektoren I, II, III sind somit überlappungsfrei zueinander in einer quer zur Kraftrichtung der Kraft F liegenden Richtung versetzt.

Im undeformierten Zustand liegt zwischen dem oberen Schenkel 9 und dem unteren Schenkel 10 ein Abstand w vor. Der maximal erreichbare Vertikalhub ist nunmehr größer als dieser Abstand w, da zusätzlich zu diesem Abstand w, welcher der Öffnungsweite der U-Form entspricht, gemäß Fig. 5a die Strecke s hinzuaddiert wird, welche der Strecke entspricht, die der obere Schenkel 9 durch den gegabelten, unteren Schenkel 10 hindurchtaucht.

Die Verbindungselemente 6 und 7 der Deformationsvorrichtung 4 sind gleichfalls derart ausgestaltet, dass sie sich beim Deformieren nicht berühren. Aus diesem Grund ist das untere Verbindungselement 6 gabelförmig ausgestaltet, wobei die Gabelweite g größer ist als die Breite b des oberen Verbindungselementes 7, so dass ein Hindurchtauchen des oberen Verbindungselementes 7 durch die Gabel des unteren Verbindungselementes 6 möglich ist.

Durch die beiden Verbindungselemente 6 und 7 ergibt sich ein unterer Deformationsraum 18 bzw. ein oberer Deformationsraum 17, in welchen der obere Schenkel 9 bzw. der untere Schenkel 10 bei der Deformation abschnittsweise eindringen kann, so dass sich bei der Deformation zunächst eine Hufeisenform ausbildet.

Der Biegeabschnitt 11 weist einen einheitlichen Biegeradius auf, welcher der Hälfte der Öffnungsweite w entspricht. Der Biegeabschnitt 11 ist halbkreisförmig, so dass der obere Schenkel 9 parallel zum unteren Schenkel 10 verläuft.

### Bezugszeichenliste:

- 1: Militärisches Fahrzeug
- 2: Fußauflage
- 3: Fußauflagenplatte
- 4: Deformationsvorrichtung
- 5: Deformationselement
- 6: unteres Verbindungselement
- 7: oberes Verbindungselement
- 8: Fahrzeugboden
- 9: oberer Schenkel
- 10: unterer Schenkel
- 10a, 10b: Schenkelabschnitte
- 11: Biegeabschnitt
- 12: Schraube
- 13: Bohrung
- 14: Bohrung
- 15: Schraube
- 16: Bohrung
- 17: oberer Deformationsraum
- 18: unterer Deformationsraum
- 19: Stegverbindung
- 20: Fahrzeugsitz
- F: Kraft
- b: Breite
- g: Gabelweite
- s: Strecke
- w: Öffnungsweite
- I, II, III: Deformationssektoren

## Patentansprüche

1. Deformationselement zum Schutz einer Einrichtung (3) in einem Fahrzeug (1) durch Umwandlung von Energie in Deformationsenergie bei einer Mineneinwirkung, mit einem unteren, mit dem Fahrzeugboden (8) verbindbaren Schenkel (10) und einem oberen, mit der Einrichtung (3) verbindbaren Schenkel (9), wobei der obere Schenkel (9) über einen Biegeabschnitt (11) mit dem unteren Schenkel (10) verbunden ist, wobei der obere Schenkel (9) und der untere Schenkel (10) übereinander liegen,
wobei der obere und der untere Schenkel (9, 10) unter dem Einfluss einer im Wesentlichen senkrecht zum Fahrzeugboden (8) gerichteten Kraft (F) in verschiedenen, quer zur Kraftrichtung gegeneinander versetzten Deformationssektoren (I, II, III) deformierbar sind, und wobei die Deformationssektoren (I, II, III) überlappungsfrei zueinander versetzt sind,
**dadurch gekennzeichnet,**
**dass** das Deformationselement gabelförmig ausgestaltet ist, so dass der untere Schenkel (10) oder der obere Schenkel zwei Schenkelabschnitte (10a, 10b) mit jeweils einem Deformationssektor (I, III) aufweist.

2. Deformationselement nach Anspruch 1, **dadurch gekennzeichnet, dass** die Deformationssektoren (I, III) des Schenkels (10) mit den zwei Schenkelabschnitten (10a, 10b) den Deformationssektor (II) des anderen Schenkels (9) umgeben.

3. Deformationselement nach einem der vorhergehenden Ansprüche, **dadurch gekennzeichnet, dass** der maximale Vertikalhub größer als der Abstand (w) zwischen dem oberen Schenkel (9) und dem unteren Schenkel (10) im undeformierten Zustand ist.

4. Deformationselement nach einem der vorhergehenden Ansprüche, **dadurch gekennzeichnet, dass** es ein im Wesentlichen U-förmiges Profil aufweist.

5. Deformationselement nach Anspruch 4, **dadurch gekennzeichnet, dass** der maximale Vertikalhub größer als die Öffnungsweite (w) der U-Form ist.

6. Deformationselement nach Anspruch 4 oder 5, **dadurch gekennzeichnet, dass** es derart ausgestaltet ist, dass es bei Einwirkung einer im Wesentlichen senkrecht zum Fahrzeugboden (8) gerichteten Kraft (F) torsionsfrei deformierbar ist.

7. Deformationselement nach einem der Ansprüche 4 bis 6, **dadurch gekennzeichnet, dass** es bei der Deformation eine progressive Kraftkennlinie aufweist, wobei es insbesondere aus Federstahl hergestellt ist.

8. Deformationselement nach einem der vorhergehenden Ansprüche, **dadurch gekennzeichnet, dass** der Biegeabschnitt (11) einen einheitlichen Biegeradius aufweist.

9. Deformationselement nach Anspruch 8, **dadurch gekennzeichnet, dass** der Biegeabschnitt (11) halbkreisförmig ist.

10. Deformationsvorrichtung mit einem Deformationselement (5) nach einem der vorhergehenden Ansprüche, **dadurch gekennzeichnet, dass** der untere Schenkel (10) mit einem unteren Verbindungselement (6) zur Verbindung mit dem Fahrzeugboden (8) verbunden ist und/oder dass der obere Schenkel (9) mit einem oberen Verbindungselement (7) zur Verbindung mit der Einrichtung (3) verbunden ist.

11. Deformationsvorrichtung nach Anspruch 10, **dadurch gekennzeichnet, dass** das untere Verbindungselement (6) einen Abstandhalter zwischen dem unterem Schenkel (10) und dem Fahrzeugboden (8) zur Erzeugung eines unteren Deformationsraumes (18) für den unteren Schenkel (10) umfasst und/oder dass das obere Verbindungselement (9) einen Abstandhalter (7) zwischen dem oberen Schenkel (9) und der Einrichtung (3) zur Erzeugung eines Deformationsraumes (17) für den oberen Schenkel (9) umfasst.

12. Deformationsvorrichtung nach Anspruch 10 oder 11, **dadurch gekennzeichnet, dass** sie derart ausgestaltet ist, dass das obere Verbindungselement (7) und das untere Verbindungselement (6) bei einer Deformation des Deformationselements (5) berührungsfrei aneinander vorbei bewegbar sind.

13. Fußauflage für ein Fahrzeug mit einer Fußauflagenplatte (3), **gekennzeichnet durch** eine oder mehrere Deformationsvorrichtungen (4) nach einem der Ansprüche 10 bis 12.

14. Fußauflage nach Anspruch 13, **dadurch gekennzeichnet, dass** die Fußauflagenplatte (3) rechteckig ist und dass sie vier, an jeder Ecke angeordnete Deformationsvorrichtungen aufweist.

15. Fußauflage nach Anspruch 13 oder 14, **dadurch gekennzeichnet, dass** die Deformationsvorrichtungen paarweise derart angeordnet sind, dass die Biegeabschnitte ihrer Deformationselemente aufeinander zu ausgerichtet sind.

## Claims

1. Deformation element for protecting a device (3) in a vehicle (1) by converting energy into deformation energy in the event of action of a mine, with a lower limb (10) which is connectable to the vehicle floor (8) and with an upper limb (9) which is connectable to the device (3), wherein the upper limb (9) is connected to the lower limb (10) via a bending portion (11), wherein the upper limb (9) and the lower limb (10) lie one above the other, wherein, under the influence of a force (F) directed substantially perpendicularly to the vehicle floor (8), the upper and the lower limb (9, 10) are deformable in different deformation sectors (I, II, III) offset with respect to one another transversely with respect to the direction of force, and wherein the deformation sectors (I, II, III) are offset with respect to one another without overlapping, **characterized in that** the deformation element is of fork-shaped design, and therefore the lower limb (10) or the upper limb has two limb portions (10a, 10b) each having a deformation sector (I, III).

2. Deformation element according to Claim 1, **characterized in that** the deformation sectors (I, III) of the limb (10) with the two limb portions (10a, 10b) surround the deformation sector (II) of the other limb (9).

3. Deformation element according to either of the preceding claims, **characterized in that** the maximum vertical stroke is greater than the distance (w) between the upper limb (9) and the lower limb (10) in the undeformed state.

4. Deformation element according to one of the preceding claims, **characterized in that** said deformation element has a substantially U-shaped profile.

5. Deformation element according to Claim 4, **characterized in that** the maximum vertical stroke is greater than the opening width (w) of the U shape.

6. Deformation element according to Claim 4 or 5, **characterized in that** said deformation element is designed so as to be deformable without torsion in the event of action of a force (F) directed substantially perpendicularly to the vehicle floor (8).

7. Deformation element according to one of Claims 4 to 6, **characterized in that** said deformation element has a progressive force characteristic during the deformation, wherein said deformation element is produced in particular from spring steel.

8. Deformation element according to one of the preceding claims, **characterized in that** the bending portion (11) has a uniform bending radius.

9. Deformation element according to Claim 8, **characterized in that** the bending portion (11) is semicircular.

10. Deformation apparatus with a deformation element (5) according to one of the preceding claims, **characterized in that** the lower limb (10) is connected to a lower connecting element (6) for connection to the vehicle floor (8), and/or **in that** the upper limb (9) is connected to an upper connecting element (7) for connection to the device (3).

11. Deformation apparatus according to Claim 10, **characterized in that** the lower connecting element (6) comprises a spacer between the lower limb (10) and the vehicle floor (8) for producing a lower deformation space (18) for the lower limb (10), and/or **in that** the upper connecting element (9) comprises a spacer (7) between the upper limb (9) and the device (3) for producing a deformation space (17) for the upper limb (9).

12. Deformation apparatus according to Claim 10 or 11, **characterized in that** said deformation apparatus is designed in such a manner that the upper connecting element (7) and the lower connecting element (6) are movable past each other without contact during deformation of the deformation element (5).

13. Footrest for a vehicle with a footrest plate (3), **characterized by** one or more deformation apparatuses (4) according to one of Claims 10 to 12.

14. Footrest according to Claim 13, **characterized in that** the footrest plate (3) is rectangular, and **in that** the latter has four deformation apparatuses arranged at each corner.

15. Footrest according to Claim 13 or 14, **characterized in that** the deformation apparatuses are arranged in pairs in such a manner that the bending portions of the deformation elements thereof are aligned with one another.

## Revendications

1. Elément de déformation servant à protéger un équipement (3) dans un véhicule (1) par la transformation de l'énergie en une énergie de déformation sous l'effet d'une mine, comprenant une branche inférieure (10) pouvant être reliée au plancher de véhicule (8) et une branche supérieure (9) pouvant être reliée à l'équipement (3), dans lequel la branche supérieure (9) est reliée à la branche inférieure (10) par l'intermédiaire d'une section de flexion (11), dans lequel la branche supérieure (9) et la branche inférieure (10) se trouvent l'une au-dessus de l'autre,dans lequel la branche supérieure et la branche inférieure (9, 10) peuvent être déformées sous l'influence d'une force (F) dirigée essentiellement de manière perpendiculaire par rapport au plancher de véhicule (8) dans différents secteurs de déformation (I, II, III) décalés les uns par rapport aux autres de manière transversale par rapport à la direction de force, et dans lequel les secteurs de déformation (I, II, III) sont décalés les uns par rapport aux autres sans chevauchement,caractérisé en ceque l'élément de déformation est configuré de manière à présenter une forme de fourche de sorte que la branche inférieure (10) ou la branche supérieure présente deux sections de branche (10a, 10b) pourvues respectivement d'un secteur de déformation (I, III).

2. Elément de déformation selon la revendication 1, **caractérisé en ce que** les secteurs de déformation (I, III) de la branche (10) entourent, par les deux sections de branche (10a, 10b), le secteur de déformation (II) de l'autre branche (9).

3. Elément de déformation selon l'une quelconque des revendications précédentes, **caractérisé en ce que** la course verticale maximale est plus grande que l'écartement (w) entre la branche supérieure (9) et la branche inférieure (10) dans l'état non déformé.

4. Elément de déformation selon l'une quelconque des revendications précédentes, **caractérisé en ce qu'**il présente un profil essentiellement en forme de U.

5. Elément de déformation selon la revendication 4, **caractérisé en ce que** la course verticale maximale est plus grande que la largeur d'ouverture (w) de la forme en U.

6. Elément de déformation selon la revendication 4 ou 5, **caractérisé en ce qu'**il est configuré de telle manière qu'il peut être déformé sans torsion lors de l'effet d'une force (F) dirigée essentiellement de manière perpendiculaire par rapport au plancher de véhicule (8).

7. Elément de déformation selon l'une quelconque des revendications 4 à 6, **caractérisé en ce qu'**il présente, en cas de déformation, une courbe caractéristique de force progressive, dans lequel l'élément est fabriqué en particulier à partir d'un acier à ressorts.

8. Elément de déformation selon l'une quelconque des revendications précédentes, **caractérisé en ce que** la section de flexion (11) présente un rayon de flexion uniforme.

9. Elément de déformation selon la revendication 8, **caractérisé en ce que** la section de flexion (11) présente une forme semi-circulaire.

10. Dispositif de déformation comprenant un élément de déformation (5) selon l'une quelconque des revendications précédentes, **caractérisé en ce que** la branche inférieure (10) est reliée à un élément de liaison (6) inférieur destiné à être relié au plancher de véhicule (8), et/ou **en ce que** la branche supérieure (9) est reliée à un élément de liaison (7) supérieur destiné à être relié à l'équipement (3).

11. Dispositif de déformation selon la revendication 10, **caractérisé en ce que** l'élément de liaison (6) inférieur comprend une entretoise entre la branche inférieure (10) et le plancher de véhicule (8) servant à produire un espace de déformation (18) inférieur pour la branche inférieure (10), et/ou **en ce que** l'élément de liaison (9) supérieur comprend une entretoise (7) entre la branche supérieure (9) et l'équipement (3) servant à produire un espace de déformation (17) pour la branche supérieure (9).

12. Dispositif de déformation selon la revendication 10 ou 11, **caractérisé en ce qu'**il est configuré de telle manière que l'élément de liaison (7) supérieur et l'élément de liaison (6) inférieur peuvent être déplacés le long l'un de l'autre sans contact en cas d'une déformation de l'élément de déformation (5).

13. Repose-pied pour un véhicule, comprenant un plateau formant repose-pied (3), **caractérisé par** un ou plusieurs dispositifs de déformation (4) selon l'une quelconque des revendications 10 à 12.

14. Repose-pied selon la revendication 13, **caractérisé en ce que** le plateau formant repose-pied (3) est rectangulaire, et **en ce qu'**il présente quatre dispositifs de déformation disposés à chaque angle.

15. Repose-pied selon la revendication 13 ou 14, **caractérisé en ce que** les dispositifs de déformation sont disposés par paire de telle manière que les sections de flexion de leurs éléments de déformation sont orientées les unes vers les autres.
